# EUROPEAN PATENT SPECIFICATION

(11) **EP 4 072 174 B1**
(45) Date of publication and mention of the grant of the patent: **10.09.2025**
(21) Application number: 21167014.6
(22) Date of filing: 06.04.2021
(51) Int. Cl.: H04W 4/50, H04W 76/27, H04W 4/70, H04W 12/30

(54) **APPARATUS, METHODS, AND COMPUTER PROGRAMS**
VORRICHTUNG, VERFAHREN UND COMPUTERPROGRAMME
APPAREIL, PROCÉDÉS ET PROGRAMMES INFORMATIQUES

(43) Date of publication of application: 12.10.2022
(73) Proprietor: Nokia Technologies Oy, 02610 Espoo (FI)
(72) Inventor: PHAN, Vinh Van, 90100 Oulu (FI); CHANDRAMOULI, Devaki, Plano, 75025 (US); LIEBHART, Rainer, D-81476 Munich (DE); ISOMAKI, Markus, 02210 Espoo (FI); YU, Ling, 02700 Kauniainen (FI)
(74) Representative: Nokia EPO representatives

(56) References cited:
- WO-A1-2020/068765
- US-A1- 2020 260 384
- "3rd Generation Partnership Project; Technical Specification Group Services and System Aspects; Study on enhanced support of Non-Public Networks (NPN) (Release 17)", vol. SA WG2, no. V17.0.0, 31 March 2021 (2021-03-31), pages 1 - 248, XP052000256, Retrieved from the Internet <URL:https://ftp.3gpp.org/Specs/archive/23_series/23.700-07/23700-07-h00.zip 23700-07-h00.docx> [retrieved on 20210331]

## Description

### Field

This disclosure relates to communications, and more particularly to apparatus, methods and computer programs in a wireless communication system. More particularly the present invention relates to provisioning of devices.

### Background

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying data for voice, electronic mail (email), text message, multimedia and/or content data communications and so on. Non-limiting examples of services provided include two-way or multi-way calls, data communication or multimedia services and access to a data network system, such as the Internet.

In a wireless system at least a part of communications occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename WiFi (or Wi-Fi). WiFi is often used synonymously with WLAN. The wireless systems can be divided into cells, and are therefore often referred to as cellular systems. A base station provides at least one cell.

A user can access a communication system by means of an appropriate communication device or terminal capable of communicating with a base station. Hence nodes like base stations are often referred to as access points. A communication device of a user is often referred to as user equipment (UE). A communication device is provided with an appropriate signal receiving and transmitting apparatus for enabling communications, for example enabling communications with the base station and/or communications directly with other user devices. The communication device can communicate on appropriate channels, e.g. listen to a channel on which a station, for example a base station of a cell, transmits.

A communication system and associated devices typically operate in accordance with a given standard or specification which sets out what the various entities associated with the system are permitted to do and how that should be achieved. Communication protocols and/or parameters which shall be used for the connection are also typically defined. Non-limiting examples of standardised radio access technologies include GSM (Global System for Mobile), EDGE (Enhanced Data for GSM Evolution) Radio Access Networks (GERAN), Universal Terrestrial Radio Access Networks (UTRAN) and evolved UTRAN (E-UTRAN). An example communication system architecture is the long-term evolution (LTE) of the Universal Mobile Telecommunications System (UMTS) radio-access technology. The LTE is standardized by the third Generation Partnership Project (3GPP). The LTE employs the Evolved Universal Terrestrial Radio Access Network (E-UTRAN) access and a further development thereof which is sometimes referred to as LTE Advanced (LTE-A).

Since introduction of fourth generation (4G) services increasing interest has been paid to the next, or fifth generation (5G) standard. 5G may also be referred to as a New Radio (NR) network.

The Internet of Things (IoT) is the interconnection via the Internet of computing devices, enabling those devices to send and receive data. An IoT device may also be considered a form of UE, having appropriate signal receiving and transmitting apparatus for enabling communications. Some such UEs may operate without a universal subscriber identity module (USIM). Such UEs may be referred to as USIM-less UEs or USIM-less devices (or apparatus).

US2020/260384 A1 describes a wireless device in an RRC connected state receives a radio resource control (RRC) message from a base station. The wireless device transitions from the RRC connected state to an RRC inactive station in response to the RRC message. The RRC message indicates an active time period in which the wireless device is reachable by paging.

3GPP: Technical Specification Group Services and System Aspects; Study on enhanced support of Non-Public Networks (NPN), Release 17 describes enhancements to the 5G system in order to enable support for Stand-alone Non-Public Network along with subscriptions or credentials owned by a separate entity.

WO2020/068765 A1 describes methods and apparatuses for securely connecting to a private local area network (LAN). In accordance with one embodiment, an apparatus may receive, from a private LAN that has been provisioned with first identifying information associated with the apparatus, a first broadcast message comprising an invitation to connect to the private LAN and the first identifying information.

### Statement of invention

According to a first aspect there is provided an apparatus comprising means for performing: receiving, from a network entity, information of a time window for the apparatus to receive one or more messages for provisioning the apparatus in a network; configuring the apparatus in an inactive state outside of the time window; and configuring the apparatus in a connected state during the time window for receiving the one or more messages for provisioning the apparatus.

According to some examples, the inactive state comprises an RRC_INACTIVE state.

According to some examples, the means are further configured to perform: based on the time window, releasing a connection with the network and configuring the apparatus in the inactive state, and reconnecting with the network for waiting for the one or more messages to arrive.

According to some examples, the means are further configured to perform: based on the time window, suspending a connection with the network and configuring the apparatus in the inactive state, and resuming the connection with the network for waiting for the one or more messages to arrive.

According to some examples, the means are further configured to perform: de-registration and configuring the apparatus with a back-off time and performing listening for the one or more messages once the back-off time has expired and the apparatus has registered and connected again to the network.

According to some examples, the means are further configured to perform negotiating the time window with the network.

According to some examples, the negotiating comprises sending a request to the network for the time window.

According to some examples, the means are further configured to perform sending a request to the network at the end of the time window.

According to some examples, the provisioning comprises user plane provisioning, and the means are further configured to perform maintaining a packet data unit session during the time window.

According to some examples, the provisioning comprises control plane provisioning, and the means are further configured to perform maintaining a non-access-stratum signaling connection during the time window.

According to some examples, the means are further configured to perform receiving the time window at the apparatus during a registration or packet data unit session establishment procedure of the apparatus.

According to some examples, the apparatus comprises a USIM-less apparatus.

According to some examples, the one or more provisioning messages are received from a provisioning server.

According to some examples, the one or more provisioning messages are received directly from the provisioning server.

According to some examples, the one or more provisioning messages are received indirectly from the provisioning server.

According to some examples, the information of a time window is received from a first standalone non-public network.

According to some examples, the first standalone non-public network comprises an onboarding standalone non-public network.

According to some examples, the network to which the apparatus is to be provisioned comprises a second standalone non-public network.

According to some examples, the second standalone non-public network comprises a subscription owning standalone non-public network.
According to some examples, the first standalone non-public network is different from the second standalone non-public network.

According to some examples, the first and second standalone non-public networks are the same.

According to some examples, the apparatus comprises a user equipment.

According to some examples, the apparatus comprises an internet-of-things apparatus.

According to some examples, the means comprises at least one processor; and at least one memory including computer program code, the at least one memory and computer program code configured to, with the at least one processor, cause the performance of the apparatus.

According to a second aspect there is provided an apparatus comprising at least one processor; and at least one memory including computer program code; the at least one memory and the computer program code configured to, with the at least one processor, cause the apparatus at least to perform: receiving, from a network entity, information of a time window for the apparatus to receive one or more messages for provisioning the apparatus in a network; configuring the apparatus in an inactive state outside of the time window; and configuring the apparatus in a connected state during the time window for receiving the one or more messages for provisioning the apparatus.

According to a third aspect there is provided an apparatus comprising: circuitry for receiving, from a network entity, information of a time window for the apparatus to receive one or more messages for provisioning the apparatus in a network; circuitry for configuring the apparatus in an inactive state outside of the time window; and circuitry for configuring the apparatus in a connected state during the time window for receiving the one or more messages for provisioning the apparatus.

According to a fourth aspect there is provided a method comprising receiving, from a network entity, information of a time window for the apparatus to receive one or more messages for provisioning the apparatus in a network; configuring the apparatus in an inactive state outside of the time window; and configuring the apparatus in a connected state during the time window for receiving the one or more messages for provisioning the apparatus.

According to some examples, the method comprises, based on the time window, releasing a connection with the network and configuring the apparatus in the inactive state, and reconnecting with the network for waiting for the one or more messages to arrive.

According to some examples, the method comprises, based on the time window, suspending a connection with the network and configuring the apparatus in the inactive state, and resuming the connection with the network for waiting for the one or more messages to arrive.

According to some examples, the method comprises de-registration and configuring the apparatus with a back-off time and performing listening for the one or more messages once the back-off time has expired and the apparatus has registered and connected again to the network.

According to some examples, the method comprises negotiating the time window with the network.

According to some examples, the negotiating comprises sending a request to the network for the time window.

According to some examples, the method comprises sending a request to the network at the end of the time window.

According to some examples, the provisioning comprises user plane provisioning, and the method comprises maintaining a packet data unit session during the time window.

According to some examples, the provisioning comprises control plane provisioning, and the method comprises maintaining a non-access-stratum signaling connection during the time window.

According to some examples, the method comprises receiving the time window at the apparatus during a registration or packet data unit session establishment procedure of the apparatus.

According to some examples, the apparatus comprises a USIM-less apparatus.

According to some examples, the one or more provisioning messages are received from a provisioning server.

According to some examples, the one or more provisioning messages are received directly from the provisioning server.

According to some examples, the one or more provisioning messages are received indirectly from the provisioning server.

According to some examples, the information of a time window is received from a first standalone non-public network.

According to some examples, the first standalone non-public network comprises an onboarding standalone non-public network.

According to some examples, the network to which the apparatus is to be provisioned comprises a second standalone non-public network.

According to some examples, the second standalone non-public network comprises a subscription owning standalone non-public network.

According to some examples, the first standalone non-public network is different from the second standalone non-public network.

According to some examples, the first and second standalone non-public networks are the same.

According to some examples, the apparatus comprises a user equipment.

According to some examples, the apparatus comprises an internet-of-things apparatus.

According to some examples, the means comprises at least one processor; and at least one memory including computer program code, the at least one memory and computer program code configured to, with the at least one processor, cause the performance of the apparatus.

According to a fifth aspect there is provided a computer program comprising instructions for causing an apparatus to perform at least the following: receiving, from a network entity, information of a time window for the apparatus to receive one or more messages for provisioning the apparatus in a network; configuring the apparatus in an inactive state outside of the time window; and configuring the apparatus in a connected state during the time window for receiving the one or more messages for provisioning the apparatus.

According to a sixth aspect there is provided a computer program comprising instructions stored thereon for performing at least the following: receiving, from a network entity, information of a time window for an apparatus to receive one or more messages for provisioning the apparatus in a network; configuring the apparatus in an inactive state outside of the time window; and configuring the apparatus in a connected state during the time window for receiving the one or more messages for provisioning the apparatus.

According to a seventh aspect there is provided a non-transitory computer readable medium comprising program instructions for causing an apparatus to perform at least the following: receiving, from a network entity, information of a time window for the apparatus to receive one or more messages for provisioning the apparatus in a network; configuring the apparatus in an inactive state outside of the time window; and configuring the apparatus in a connected state during the time window for receiving the one or more messages for provisioning the apparatus.

According to an eighth aspect there is provided a non-transitory computer readable medium comprising program instructions stored thereon for performing at least the following: receiving, from a network entity, information of a time window for the apparatus to receive one or more messages for provisioning the apparatus in a network; configuring the apparatus in an inactive state outside of the time window; and
configuring the apparatus in a connected state during the time window for receiving the one or more messages for provisioning the apparatus.

According to a ninth aspect there is provided a network apparatus comprising means for performing: negotiating, with one or more other network apparatus, a time window to be sent to a user equipment, the time window for indicating to the user equipment a time for receiving one or more messages for provisioning the user equipment in a network.

According to some examples, the means are further configured to perform causing information of the time window to be sent to the user equipment.

According to some examples, the means are further configured to perform causing the time window to be sent to the user equipment during a registration or packet data unit session establishment procedure of the user equipment.

According to some examples, the provisioning comprises user plane provisioning, and the means are further configured to perform maintaining a packet data unit session during the time window.

According to some examples, the provisioning comprises control plane provisioning, and the means are further configured to perform causing a non-access-stratum signaling connection to be maintained or released depending on the time window.

According to some examples, the network apparatus comprises a first network apparatus, and the one or more other network apparatus comprise a second network apparatus and a third network apparatus.

According to some examples, the first network apparatus comprises an onboarding standalone non-public network apparatus.

According to some examples, the first network apparatus comprises an Access and Mobility Management Function.

According to some examples, the second network apparatus comprises a subscription owning standalone non-public network apparatus.

According to some examples, the onboarding standalone non-public network is different to the subscription owning standalone non-public network.

According to some examples, the onboarding standalone non-public network is the same as the subscription owning standalone non-public network.

According to some examples, the third network apparatus comprises a provisioning server.

According to some examples, the negotiation of the time window considers one or more of: a type of the user equipment; further information of the user equipment; analytics information of behaviour of the user equipment.

According to some examples, the user equipment comprises an internet-of-things apparatus.

According to some examples, the user equipment is USIM-less.

According to some examples, the means comprises at least one processor; and at least one memory including computer program code, the at least one memory and computer program code configured to, with the at least one processor, cause the performance of the apparatus.

According to a tenth aspect, there is provided an apparatus comprising at least one processor; and at least one memory including computer program code; the at least one memory and the computer program code configured to, with the at least one processor, cause the apparatus at least to perform: negotiating, with one or more other network apparatus, a time window to be sent to a user equipment, the time window for indicating to the user equipment a time for receiving one or more messages for provisioning the user equipment in a network.

According to an eleventh aspect, there is provided an apparatus comprising: circuitry for negotiating, with one or more other network apparatus, a time window to be sent to a user equipment, the time window for indicating to the user equipment a time for receiving one or more messages for provisioning the user equipment in a network.

According to a twelfth aspect, there is provided a method comprising negotiating, with one or more other network apparatus, a time window to be sent to a user equipment, the time window for indicating to the user equipment a time for receiving one or more messages for provisioning the user equipment in a network.

According to some examples, the method comprises causing information of the time window to be sent to the user equipment.

According to some examples, the method comprises causing the time window to be sent to the user equipment during a registration or packet data unit session establishment procedure of the user equipment.

According to some examples, the provisioning comprises user plane provisioning, and the method comprises maintaining a packet data unit session during the time window.

According to some examples, the provisioning comprises control plane provisioning, and the method comprises causing a non-access-stratum signaling connection to be maintained or released depending on the time window.

According to some examples, the network apparatus comprises a first network apparatus, and the one or more other network apparatus comprise a second network apparatus and a third network apparatus.

According to some examples, the first network apparatus comprises an onboarding standalone non-public network apparatus.

According to some examples, the first network apparatus comprises an Access and Mobility Management Function.

According to some examples, the second network apparatus comprises a subscription owning standalone non-public network apparatus.

According to some examples, the onboarding standalone non-public network is different to the subscription owning standalone non-public network.

According to some examples, the onboarding standalone non-public network is the same as the subscription owning standalone non-public network.

According to some examples, the third network apparatus comprises a provisioning server.

According to some examples, the negotiation of the time window considers one or more of: a type of the user equipment; further information of the user equipment; analytics information of behaviour of the user equipment.

According to some examples, the user equipment comprises an internet-of-things apparatus.

According to some examples, the user equipment is USIM-less.

According to some examples, the means comprises at least one processor; and at least one memory including computer program code, the at least one memory and computer program code configured to, with the at least one processor, cause the performance of the apparatus.

According to a thirteenth aspect there is provided a computer program comprising instructions for causing a network apparatus to perform at least the following: negotiating, with one or more other network apparatus, a time window to be sent to a user equipment, the time window for indicating to the user equipment a time for receiving one or more messages for provisioning the user equipment in a network.

According to a fourteenth aspect there is provided a computer program comprising instructions stored thereon for performing at least the following: negotiating, by a network apparatus with one or more other network apparatus, a time window to be sent to a user equipment, the time window for indicating to the user equipment a time for receiving one or more messages for provisioning the user equipment in a network.

According to a fifteenth aspect there is provided a non-transitory computer readable medium comprising program instructions for causing a network apparatus to perform at least the following: negotiating, with one or more other network apparatus, a time window to be sent to a user equipment, the time window for indicating to the user equipment a time for receiving one or more messages for provisioning the user equipment in a network.

According to a sixteenth aspect there is provided a non-transitory computer readable medium comprising program instructions stored thereon for performing at least the following: negotiating, by a network apparatus with one or more other network apparatus, a time window to be sent to a user equipment, the time window for indicating to the user equipment a time for receiving one or more messages for provisioning the user equipment in a network.

### Brief description of Figures

The invention will now be described in further detail, by way of example only, with reference to the following examples and accompanying drawings, in which:
Figure 1 schematically shows parts of a communication network according to an example;
Figure 2A schematically shows onboarding of a device according to an example;
Figure 2B schematically shows onboarding of a device according to an example;
Figure 3A is a signalling diagram schematically showing onboarding of a device according to an example;
Figure 3B is a signalling diagram schematically showing onboarding of a device according to an example;
Figure 3C is a signalling diagram schematically showing onboarding of a device according to an example;
Figure 4 schematically shows parts of a user equipment according to an example;
Figure 5 schematically shows parts of a control apparatus according to an example;
Figure 6 schematically shows a method according to an example;
Figure 7 schematically shows a method according to an example;
Figure 8 shows a schematic representation of a non-volatile memory medium storing instructions which when executed by a processor allow a processor to perform one or more of the steps of the methods of some embodiments.

### Detailed description

The present disclosure relates to network provisioning of devices. Provisioning is part of the overall "on-boarding" procedure. In some examples, "provisioning" may comprise providing credentials and/or other profile information to a device or apparatus. According to some examples, the device may comprise a device having a USIM. According to some examples, the device may be USIM-less. For conciseness, the term UE (user equipment) will hereon be used to cover each of these alternatives. In some examples, the UE comprises an industrial internet of things (IIoT) UE. For example, an IIoT UE may comprise a device that operates in a home, office, factory, or the like.

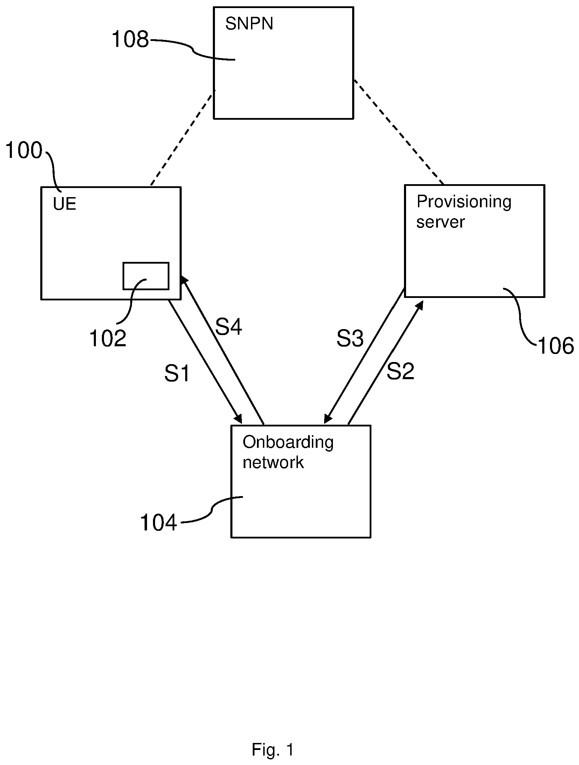

With reference to Figure 1, a UE 100 is shown. For example, the UE 100 may comprise an IoT device. UE 100 is equipped with default (e.g. manufacturer created) credentials that allow a provisioning application (schematically shown at 102) of the UE 100 to securely send and receive messages to and from a server 106. The server 106 may be referred to as a provisioning server (PVS). In some examples, by "provisioning" is meant to provide the UE with one or more credentials such as one or more of: one or more subscription identifiers; one or more security credentials; one or more certificates. Additionally or alternatively, provisioning may comprise providing profile information such as one or more of: preferred SNPN list; GIN list; DNN (Data Network Name); NSSAI (Network Slice Selection Assistance Information). The provisioned information enables the UE to communicate and register with a network. Therefore, generally speaking, the provisioning data can be considered any kind of data necessary to connect to a network and provide communication services. The provisioning of information to the UE is part of "onboarding" the UE. An "onboarding network" (ONN) 104 may operate as an intermediary between the UE 100 and the provisioning server 104, for onboarding the UE 100. For example, the ONN 104 may comprise a Standalone Non-Public 5G Network (SNPN). Therefore, in some examples the SNPN may be denoted as an Onboarding SNPN (ON-SNPN). In some examples the onboarding network 104 may comprise a Public Network Integrated NPN (PNI-NPN) or a Public Land Mobile Network (PLMN). In some examples the onboarding network 104 provides the UE 100 with just enough information or connectivity to enable communication by the UE 100 with the provisioning server 106. In some examples, the PVS 106 is connected to both ONN 104 and SO-SNPN 108. According to some examples, the PVS 108 has a trusted relationship with the SO-SNPN 108 and communicates with the SO-SNPN for provisioning the UE with information of the SO-SNPN. According to some examples, the PVS may be considered as a third-party server. According to some examples the PVS 106 is within the ONN 104. According to some examples, the PVS 106 is outside the ONN 104.

In some examples, an initial message is sent from the UE 100 via onboarding network 104 to the provisioning server 106, as shown at S1 and S2. In some examples, the initial message comprises an identity of the UE and its default credentials to initiate the remote provisioning process.

A provisioning message is then sent from the provisioning server 106 to the UE 100, again via the onboarding network 104 (see S3 and S4). In some examples, the provisioning message may contain credentials and subscription information that allow the UE 100 to register to a SNPN 108 as a normal subscriber. In some examples the SNPN 108 is denoted as a SO-SNPN (subscription owner SNPN). The SO-SNPN 108 may be the same or a different SNPN from the ON-SNPN 104.

The time taken for the provisioning server 106 to send the provisioning message (S3) after limited connectivity is established for the purpose of onboarding (S1 and S2) may not be predictable. In some examples this is because steps may be performed by different parties within the network (e.g. different parties within onboarding network 104). Therefore, the UE 100 may need to remain in connected mode for a long or indefinite period of time, waiting for the provisioning message(s).

Thus, given unpredictable delay incurred for the provisioning procedure, providing and maintaining the limited network connectivity for the UE 100 to transmit the initial message (S1) and receive the provisioning message (S4) at this stage of the onboarding process may be resource consuming for both the serving network (e.g. onboarding network 104) and the UE 100.

To summarise, a UE connects to the onboarding network (ON-SNPN or ONN) to get a connection to the PVS. From the PVS the UE can obtain credentials and subscription information so that the UE can connect to the SO-SNPN, or potentially other SNPN or PLMN.

The present disclosure considers how to minimize resource consumption, prevent overload for both the serving network and the UE 100 while allowing for a flexible and scalable support of the onboarding process.

When many (perhaps even thousands or millions) of UEs are trying to onboard, there is a possibility that the ONN 104 and/or SO-SNPN 108 gets overloaded. Therefore, according to the present disclosure, it is carefully ensured that the UEs trying to onboard are connected only when required for receiving the credentials from respective provisioning server 106 for the SO-SNPN 108.

Currently, 3GPP is considering two methods for provisioning and providing support for the onboarding process.

A first process is user plane (UP) based. The 3GPP network is responsible just for establishing packet data unit (PDU) Session with (potentially) limited connectivity, allowing an exchange of UP data between UE and PVS.

A second process is control plane (CP) based. Provisioning data are transmitted between UE and 5GC (5G core network) using non access stratum (NAS) signalling procedure. The procedure is transparent to AMF (to avoid tampering of the SO-SNPN credentials by ON-SNPN).

In these two processes, three parties may be involved:
- The onboarding SNPN (ON-SNPN) e.g. onboarding network 104 of Figure 1. This is the serving network providing connectivity to the UE.
- A default credential server/provider (DCS). The DCS can authenticate the UE and secure the communication with the UE. This may comprise the default credential server authenticating the UE using UE's default credentials.
- The SO-SNPN e.g. SO-SNPN 108 of Figure 1. The SO-SNPN provides provisioning data for the UE.

In either or both of these processes the problem remains of unpredictability of the time period for getting the provisioning message to the UE, which may result in wastage of resources on both the network and the UE side.

As will be discussed in more detail below, the present disclosure provides an approach for minimising the amount of time the UE that is being onboarded needs to be in connected mode for receiving its provisioning message(s). The proposed approach involves negotiation between UE, the onboarding network and the network hosting the provisioning server. The negotiation may also involve communication with the UE. Thus, a time for the UE to be connected and waiting for the provisioning message can be determined and tailored to that UE may also consider prevailing network conditions, rather than a "one-size fits all approach" such as a simple de-registration timer.

In some examples there may be a long delay between initiation of onboarding and when the provisioning message(s) can actually be provided. In some examples, the UE can move in to an inactive state until the scheduled sending of the provisioning message(s). Therefore, for the purpose of receiving the provisioning message(s), the UE need only be connected for the scheduled time of receipt of the provisioning message(s). Outside of the scheduled time, the UE can be in an inactive state, thus saving resources and power. The saving of resources and power will be increased system-wide where there are many UEs trying to onboard at the same or nearly the same time, where the scheduling can consider other UEs that are also trying to onboard. That is in some examples there may be coordination in the scheduling of the provisioning messages to multiple UEs, rather than blindly sending a de-registration timer to all UEs.

According to examples, the UE 100 is provided with a time-window by the network. According to some examples the time window may be considered to be a time period. According to some examples the time window comprises a start time and an end time. According to some examples the time window comprises a period which starts once the UE received the message with the time period. According to some examples, the UE connects, or re-connects, to the network during the time window for the purpose of receiving one or more provisioning messages. In examples, this enables the serving network to control the delivery of at least the provisioning message(s) flexibly so as to minimize resource consumption for both the serving network (e.g. onboarding network 104) and the UE 100. According to some examples, the UE 100 may also request that the provisioning message(s) be delivered at a specific time window. For example, this request may be sent by the UE 100 to the provisioning server 106, via the onboarding network 104. According to some examples, this enables the UE to save power outside this time window. In some examples the time window can start at any time after successful authentication of the UE 100 by the onboarding network 104. In some examples, the time window is configured to start straight after successful authentication has occurred.

According to some examples the negotiation for the time window takes place between two or more network entities. For example, the negotiation may take place between the ONN 104 and the SO-SNPN 108. According to some examples, the negotiation for the time window takes place between UE 100 and one or more network entities. For example, the negotiation may take place between the UE 100 and the ONN 104 and/or the SO-SNPN 108.

In some examples, the time window can be locally configured in the ONN 104. In some examples, the time window can be locally configured in the ONN 104 based on one or more parameters. According to some examples, the one or more parameters may comprise one or more of: provisioning type (CP or UP provisioning); UE type; information regarding provisioning application protocol used by the UE (which information may be provided to the ONN 104 by the UE 100 during initial connection); subscription information (if available, e.g. in PNI-NPN and PLMN cases); analytics of UE behaviour; information received from the DCS, PVS or an entity in the SO-SNPN, using e.g. a NEF API (Network exposure function application programming interface).

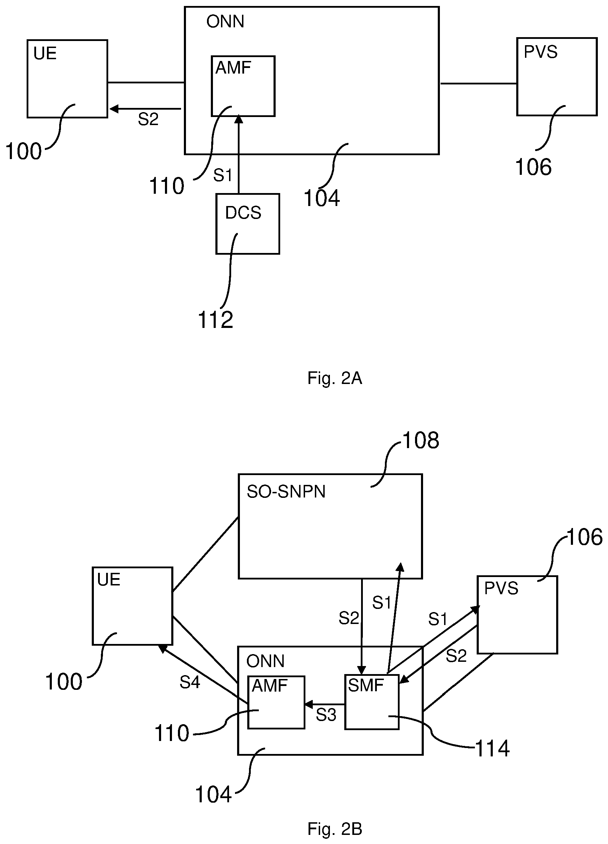

Figure 2A schematically shows an example where the negotiation of the time window takes place during a UE registration phase. Here, the default credential server (DCS) 112 provides the AMF 110 with time window related information (S1). In some examples, the DCS 112 provides the time window related information directly to the AMF 110. In some examples, the DCS 112 provides the time window related information to the AMF 110 via the PVS 106. The AMF 110 then provides the time window information to the UE 100 (S2). In some examples, the AMF 110 provides the time window information to the UE 100 in a Registration Accept message.

Figure 2B schematically shows an example where the negotiation of the time window takes place during a PDU session establishment phase. Here, at S1 a session management function (SMF) 114 contacts the PVS 106 or an entity in the SO-SNPN 108 to retrieve the time window related information. According to some examples, S1 takes place during secondary authentication. The SMF then receives time window information in return, as shown at S2. At S3, the SMF 114 forwards the time window information to the AMF 110, as shown at S3. The AMF 110 then forwards the time window information to the UE 100, as shown at S4.

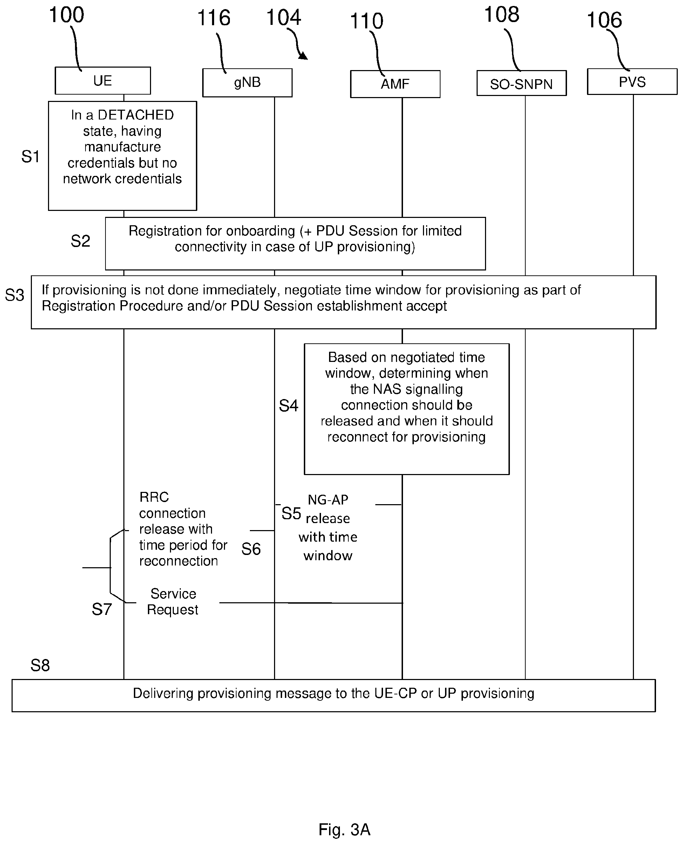

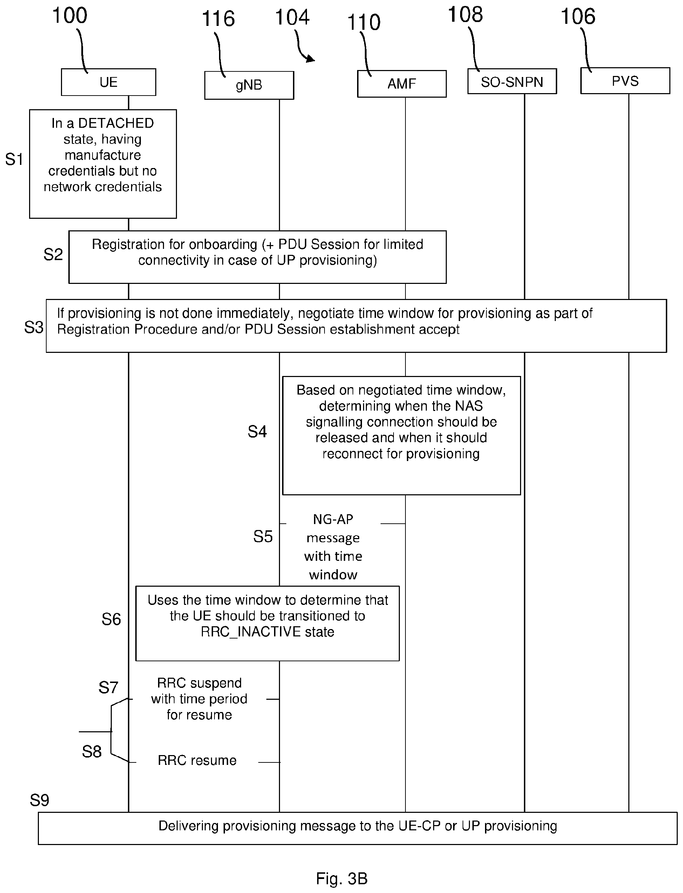

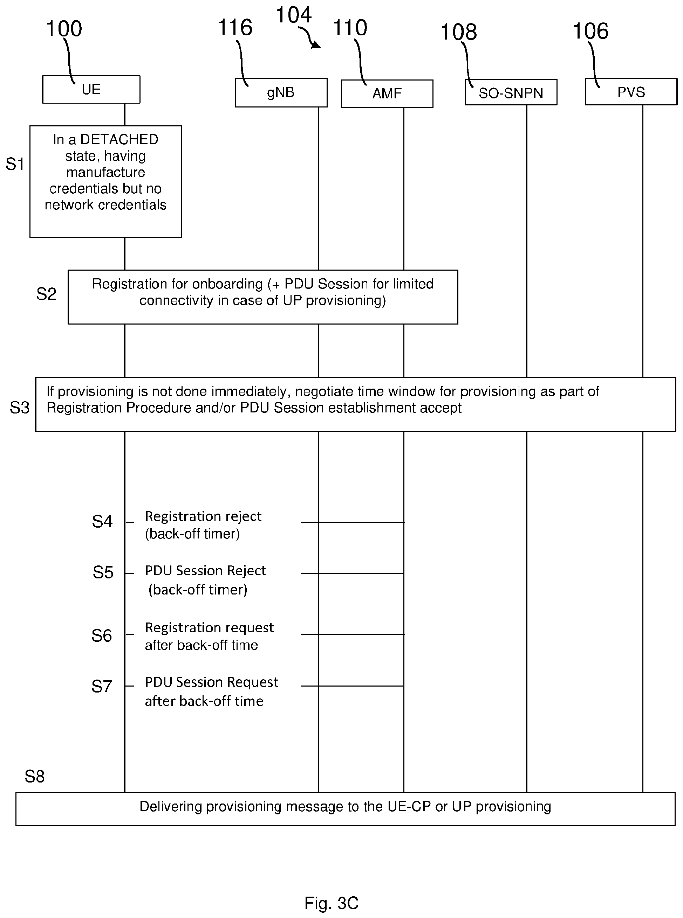

Further description will now be provided with respect to Figures 3A, 3B and 3C showing how the ONN 104 can use the negotiated time window to optimally move a UE 100 to the RRC IDLE or RRC INACTIVE state until a scheduled time for receipt of a provisioning message. These Figures also show how the UE 100 can be requested to re-connect to the network automatically without having to page the UE. More particularly, Figures 3A to 3C show communication between a UE 100, ONN 104, SO-SNPN 108, and PVS 106. In the examples of Figures 3A to 3C, the ONN 104 comprises AMF 110. A base station (gNB) 116 is shown, which provides the UE 100 with access to the ONN 104. According to some examples, the gNB 116 is part of the ONN 104.

Figures 3A, 3B and 3C show three alternative approaches (respectively referred to as Alternative 1, Alternative 2, and Alternative 3). Within each alternative, the procedure may differ depending on whether it is UP based provisioning or CP based provisioning, as explained in more detail below.

For each of Alternatives 1 to 3, steps S1 to S3 are the same.

At S1, the UE 100 is in a detached state, having manufacturer credentials but no network credentials.

As shown generally at S2, the ONN 104 and SO-SNPN 108 perform registration for onboarding. Additionally, a PDU session may be established for limited connectivity, in case of UP provisioning.

If provisioning has not been carried out immediately, then as shown at S3 a negotiation takes place between UE 100 and the network for the provisioning time window.

### Alternative 1 - Figure 3A

Alternative 1 is shown with respect to Figure 3A. In Alternative 1 a time window is negotiated, during which time window UE 100 will re-connect in order to receive the provisioning message.

As shown at S4, based on the negotiated time window, the AMF 110 determines when NAS signalling connection for the UE shall be released, and when the UE 100 shall re-connect for provisioning.

Therefore, as shown at S5, the AMF 110 sends a release message to the gNB 116. According to some examples, this release message comprises information of the time window. In some examples, the message comprises an NG-AP (Next Generation Application Part) release message.

At S6, the gNB 116 sends an RRC connection release message to the UE 110, including the time window for reconnection.

The UE 110 can then enter an idle or inactive state until the time window.

When the time window is reached, the UE reconnects to the network. In this example, this is shown at S7 where a service request message is sent from UE 100 to AMF 110 (which may be via gNB 116).

As shown at S8, the PVS 106, via the network, delivers the provisioning message(s) to the UE. This may be achieved by CP provisioning or UP provisioning. Ultimately, the UE 100 can then connect to SO-SNPN 108.

### UP based provisioning

Based on the time window negotiated, ONN 104 retains PDU Session with limited connectivity for the expected duration of the time window, or slightly longer than that, to avoid that the connectivity is released prior to delivery of UP provisioning message(s).

### CP based provisioning

Based on the time window negotiated (i.e. provisioning is expected to happen at a certain time only), AMF 110 in the ONN 104 can determine if the NAS signaling connection (NGAP + RRC) for the UE needs to be released and if so, it triggers the release accordingly to move the UE to RRC_IDLE state. The AMF may also provide information of when the UE should reconnect to move from RRC_IDLE to RRC_CONNECTED state.

### Alternative 2 - Figure 3B

Alternative 2 is shown with respect to Figure 3B. In alternative 2 the UE 100 resumes a connection after the negotiated time window.

As shown at S4, based on the negotiated time window, AMF 110 determines when the NAS signalling connection should be released for the UE 100, and when the UE should reconnect for provisioning.

At S5, the AMF sends a message to the gNB 116 with the time window. In some examples, the message at S5 is an NG-AP message.

As shown at S6, the gNB 116 uses the received time window to determine when the UE 100 should be transitioned to idle or inactive state. According to some examples, the idle or inactive states could generically be considered low power states.

At an appropriate time, as shown at S7 the gNB 116 sends a message to the UE 100 to suspend its radio connection (i.e. enter an idle or inactive state). For example, the message at S7 may comprise an RRC suspend message including the time to resume. According to examples, the message at S7 also contains information of when the radio connection should be resumed. In response, the UE suspends its radio connection.

At S8, the UE determines that the time window has opened or is about to open, and therefore sends a message to the gNB 116 to resume the radio connection. The message at S8 may comprise an RRC resume message. The UE 100 then resumes its radio connection.

As shown at S9, the PVS 106, via the network, delivers the provisioning message(s) to the UE 100. This may be achieved by CP provisioning or UP provisioning. Ultimately, the UE 100 can then connect to SO-SNPN 108.

### UP based provisioning

Based on the time window negotiated (i.e. provisioning is expected to happen at a certain time only), AMF 110 in the ONN 104 can determine if the NAS signaling connection (NGAP + RRC) for the UE 100 needs to be released and if so, it triggers the release accordingly. If the UE's NAS signaling connection is released, the AMF 110 may also provide a time window in the NGAP release towards NG-RAN (e.g. gNB 116). NG-RAN can optionally include the time window in the RRC Release request to UE 100. The UE 100 uses this time window to re-connect to the network and transitioning to connected state. This removes the need for the network to be paging the UE in order for the network to provision the UE 100. AMF 110 may provide the negotiated time window to the NG-RAN (e.g. gNB 116), and the NG-RAN may use it to determine that the UE 100 should be moved to RRC_INACTIVE state by performing RRC Suspend procedure. The UE can use the time window to perform RRC resume procedure.

### CP based provisioning

If the UE's NAS signaling connection is released, the AMF 110 may also provide a time window in the NGAP release towards NG-RAN (e.g. gNB 116). NG-RAN can optionally include the time window in the RRC Release request to the UE 100. The UE 100 uses this time window to re-connect to the network and for transitioning to the connected state. This removes the need for the network to be paging the UE in order for the network to provision the UE 100. AMF 110 may provide the negotiated time window to the NG-RAN (e.g. gNB 116), and the NG-RAN may use the time window to determine that the UE 100 should be moved to RRC_INACTIVE state.

### Alternative 3 - Figure 3C

Alternative 3 is shown with respect to Figure 3C. In alternative 3, the UE re-registers and/or re-establishes PDU session after a back-off time.

As shown at S4, the AMF 110 sends a registration reject message to the UE 100. In examples, the registration reject message comprises a back-off time. In examples, the back-off time indicates an amount of time for which the UE 100 should not try to connect to the network.

As shown at S5, the AMF 110 sends a PDU session reject message to the UE 100. In examples, this message comprises the back-off time.

In some examples, both S4 and S5 occur. In some examples, S4 and S5 are alternatives.

As shown at S6, after the back-off time has elapsed the UE 110 sends a registration request message to the AMF 110.

As shown at S7, the UE 100 sends a PDU session request message to the AMF after the back-off time.

In some examples, both S6 and S7 occur. In some examples, S6 and S7 are alternatives. In some examples, S4 is linked with S6 and S5 is linked with S7.

Then, as shown at S8 the PVS 106, via the network, delivers the provisioning message(s) to the UE 100. This may be achieved by CP provisioning or UP provisioning. Ultimately, the UE 100 can then connect to SO-SNPN 108.

### UP based provisioning

AMF 110 rejects the registration procedure and/or PDU session establishment procedure and sets the back-off time accordingly, based on the negotiated time window. The UE 100 will then re-attempt the registration procedure after the back-off time has expired.

### CP based provisioning

AMF 110 rejects the registration procedure and/or PDU session establishment procedure and sets the back-off time accordingly, based on the negotiated time window. The UE 100 will then re-attempt the registration procedure and/or PDU session establishment message after the back-off time has expired. In some examples it may be an option for the AMF 110 to include the time in the registration accept message. The registration accept message can be used as an indication for the UE to remain registered but transition to idle state and to reconnect with a service request message after the time expired.

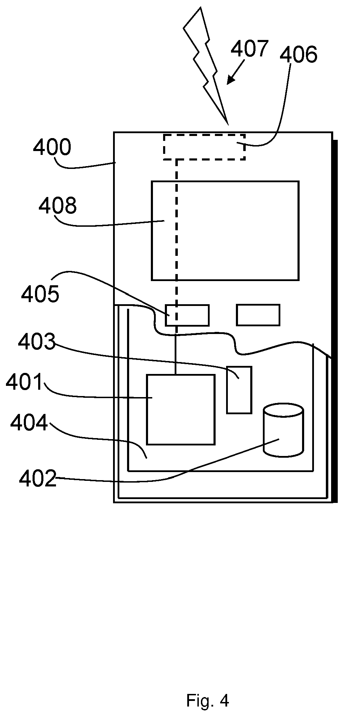

A possible wireless communication device will now be described in more detail with reference to Figure 4 showing a schematic, partially sectioned view of a communication device 400. Such a communication device is often referred to as user equipment (UE) or terminal. For example, the UE may comprise a USIM-less UE.

The UE 400 may receive signals over an air or radio interface 407 via appropriate apparatus for receiving and may transmit signals via appropriate apparatus for transmitting radio signals. In Figure 4 transceiver apparatus is designated schematically by block 406. The transceiver apparatus 406 may be provided for example by means of a radio part and associated antenna arrangement. The antenna arrangement may be arranged internally or externally to the wireless device.

The UE 400 is typically provided with at least one data processing entity 401, at least one memory 402 and other possible components 403 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 404. In some examples the user may control the operation of the UE by means of a suitable user interface such as key pad 405, voice commands, touch sensitive screen or pad, combinations thereof or the like. A display 408, a speaker and a microphone may also be provided, in some examples. Furthermore, a UE 400 may comprise appropriate connectors (either wired or wireless) to other devices and/or for connecting external accessories.

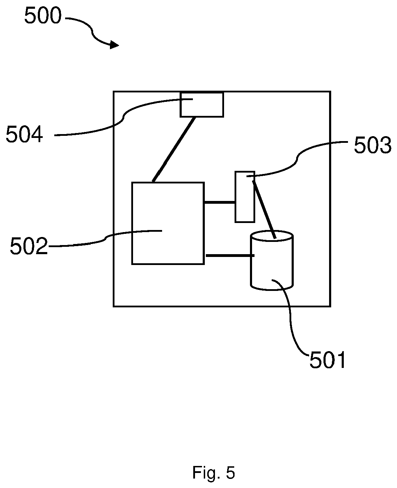

Figure 5 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host. The control apparatus may also comprise a network apparatus of ONN 104, PVS 106, or SO-SNPN 108, for example. The control apparatus 500 can be arranged to provide control on communications in the service area of the system. The control apparatus 500 comprises at least one memory 501, at least one data processing unit 502, 503 and an input/output interface 504. Via the interface the control apparatus can be coupled to a receiver and a transmitter of the base station. The receiver and/or the transmitter may be implemented as a radio front end or a remote radio head. For example, the control apparatus 500 or processor 501 can be configured to execute an appropriate software code to provide the control functions.

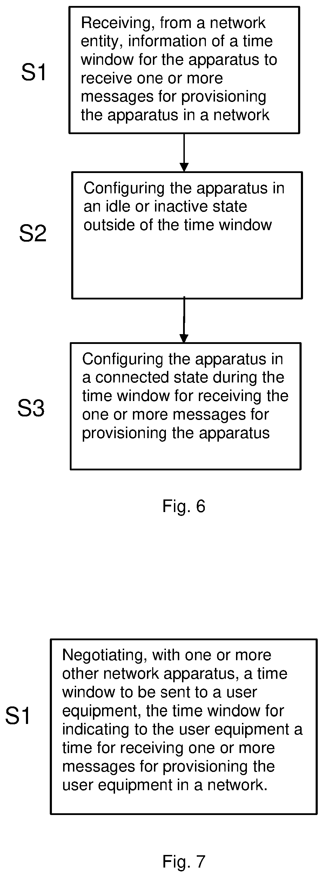

Figure 6 is a flow-chart of a method according to an example. According to some examples, the method of Figure 6 is carried out by an apparatus. For example, the apparatus may comprise a UE. For example, the apparatus may comprise a USIM-less UE.

At S1, the method comprises receiving, from a network entity, information of a time window for the apparatus to receive one or more messages for provisioning the apparatus in a network.

At S2, the method comprises configuring the apparatus in an idle or inactive state outside of the time window.

At S3, the method comprises configuring the apparatus in a connected state during the time window for receiving the one or more messages for provisioning the apparatus.

Figure 7 is a flow chart of a method according to an example. According to some examples, the method of Figure 7 is carried out by an apparatus. For examples, the apparatus may comprise a network apparatus. For example, the apparatus may comprise an ONN apparatus. For example, the apparatus may comprise an AMF.

As shown at S1, the method comprises negotiating, with one or more other network apparatus, a time window to be sent to a user equipment, the time window for indicating to the user equipment a time for receiving one or more messages for provisioning the user equipment in a network.

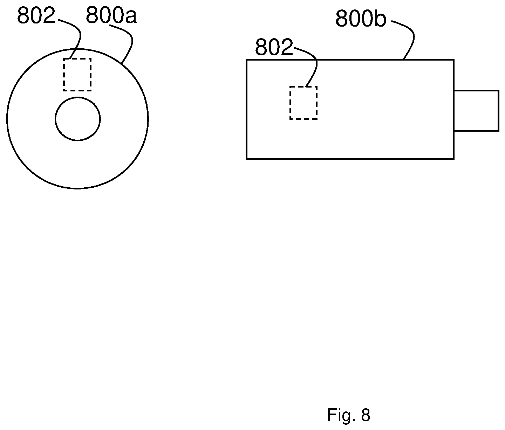

Figure 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the methods of Figures 6 to 7. In general, the various embodiments may be implemented in hardware or special purpose circuits, software, logic or any combination thereof. Some aspects of the disclosure may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following: (a) hardware-only circuit implementations (such as implementations in only analog and/or digital circuitry) and(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed, there is a further embodiment comprising a combination of one or more embodiments with any of the other embodiments previously discussed.

## Claims

1. An apparatus (100, 400) comprising means for performing:
receiving, from a network entity (110), information of a time window for the apparatus to receive one or more messages for provisioning the apparatus (100, 400) in a network (104);
**characterised in that** the apparatus (100, 400) comprises means for performing configuring the apparatus (100, 400) in an inactive state outside of the time window; and
configuring the apparatus (100, 400) in a connected state during the time window for receiving the one or more messages for provisioning the apparatus (100, 400).

2. An apparatus (100, 400) according to claim 1, wherein the means are further configured to perform one of:
based on the time window, releasing a connection with the network (104) and configuring the apparatus (100, 400) in the inactive state, and reconnecting with the network (104) for waiting for the one or more messages to arrive; or
based on the time window, suspending a connection with the network (104) and configuring the apparatus (100, 400) in the inactive state, and resuming the connection with the network (104) for waiting for the one or more messages to arrive; or
de-registration and configuring the apparatus (100, 400) with a back-off time and performing listening for the one or more messages once the back-off time has expired and the apparatus (100, 400) has registered and connected again to the network (104).

3. An apparatus (100, 400) according to claim 1 or claim 2, wherein the means are further configured to perform negotiating the time window with the network (104).

4. An apparatus (100, 400) according to any of claims 1 to 3, wherein the provisioning comprises user plane provisioning, and the means are further configured to perform maintaining a packet data unit session during the time window; and/or
wherein the provisioning comprises control plane provisioning, and the means are further configured to perform maintaining a non-access-stratum signaling connection during the time window.

5. An apparatus (100, 400) according to any of claims 1 to 4, wherein the means are further configured to perform receiving the time window at the apparatus (100, 400) during a registration or packet data unit session establishment procedure of the apparatus (100, 400).

6. An apparatus (100, 400) according to any of claims 1 to 5, wherein the apparatus (100, 400) comprises a USIM-less apparatus.

7. A network apparatus (110) **characterised in that** the network apparatus comprises means for performing:
negotiating, with one or more other network apparatus, a time window to be sent to a user equipment (100, 400), the time window for indicating to the user equipment (100, 400) a time for receiving one or more messages for provisioning the user equipment in a network (104) and for configuring the user equipment (100, 400) in an inactive state outside of the time window and for configuring the user equipment (100, 400) in a connected state during the time window for receiving the one or more messages for provisioning the user equipment (100, 400);
wherein the user equipment (100, 400) is configured in an inactive state outside of the time window and is configured in a connected state during the time window for receiving the one or more messages for provisioning the user equipment (100, 400) in the network (104).

8. A network apparatus (110) according to claim 7, wherein the means are further configured to perform causing information of the time window to be sent to the user equipment (100, 400).

9. A network apparatus (110) according to claim 7 or claim 8, wherein the means are further configured to perform causing the time window to be sent to the user equipment (100, 400) during a registration or packet data unit session establishment procedure of the user equipment (100, 400).

10. A network apparatus (110) according to any of claims 7 to 9, wherein the provisioning comprises user plane provisioning, and the means are further configured to perform maintaining a packet data unit session during the time window.

11. A network apparatus (110) according to any of claims 7 to 10, wherein the provisioning comprises control plane provisioning, and the means are further configured to perform causing a non-access-stratum signaling connection to be maintained or released depending on the time window.

12. A method performed by an apparatus (100, 400), comprising:
receiving, from a network entity (110), information of a time window for the apparatus (100, 400) to receive one or more messages for provisioning the apparatus (100, 400) in a network (104);
**characterised in that** the method further comprises: configuring the apparatus (100, 400) in an inactive state outside of the time window; and
configuring the apparatus (100, 400) in a connected state during the time window for receiving the one or more messages for provisioning the apparatus (100, 400).

13. A method performed by a network apparatus (110), **characterised in that** the method comprises:
negotiating, with one or more other network apparatus, a time window to be sent to a user equipment (100, 400), the time window for indicating to the user equipment (100, 400) a time for receiving one or more messages for provisioning the user equipment (100, 400) in a network (104) and for configuring the user equipment (100, 400) in an inactive state outside of the time window and for configuring the user equipment (100, 400) in a connected state during the time window for receiving the one or more messages for provisioning the user equipment (100, 400);
wherein the user equipment (100, 400) is configured in an inactive state outside of the time window and is configured in a connected state during the time window for receiving the one or more messages for provisioning the user equipment (100, 400) in the network (104).

14. A computer program comprising instructions for causing an apparatus (100, 400) to perform at least the following:
receiving, from a network entity (110), information of a time window for the apparatus (100, 400) to receive one or more messages for provisioning the apparatus (100, 400) in a network (104);
**characterised in that** the computer program further comprises instructions for causing the apparatus (100, 400) to: configure the apparatus (100, 400) in an inactive state outside of the time window; and
configure the apparatus (100, 400) in a connected state during the time window for receiving the one or more messages for provisioning the apparatus (100, 400).

15. A computer program, **characterised in that** the computer program comprises instructions for causing a network apparatus (110) to perform at least the following:
negotiating, with one or more other network apparatus, a time window to be sent to a user equipment (100, 400), the time window for indicating to the user equipment (100, 400) a time for receiving one or more messages for provisioning the user equipment (100, 400) in a network (104) and for configuring the user equipment (100, 400) in an inactive state outside of the time window and for configuring the user equipment (100, 400) in a connected state during the time window for receiving the one or more messages for provisioning the user equipment (100, 400);
wherein the user equipment (100, 400) is configured in an inactive state outside of the time window and is configured in a connected state during the time window for receiving the one or more messages for provisioning the user equipment (100, 400) in the network (104).

## Patentansprüche

1. Einrichtung (100, 400), die Mittel zum Durchführen von Folgendem umfasst:
Empfangen von Informationen über ein Zeitfenster für die Einrichtung zum Empfangen von einer oder mehreren Nachrichten zum Bereitstellen der Einrichtung (100, 400) in einem Netzwerk (104) von einer Netzwerkentität (110);
**dadurch gekennzeichnet, dass** die Einrichtung (100, 400) Mittel zum Durchführen eines Auslegens der Einrichtung (100, 400) in einem Inaktivitätszustand außerhalb des Zeitfensters umfasst; und
Auslegen der Einrichtung (100, 400) in einem Verbindungszustand während des Zeitfensters zum Empfangen der einen oder der mehreren Nachrichten zum Bereitstellen der Einrichtung (100, 400).

2. Einrichtung (100, 400) nach Anspruch 1, wobei die Mittel ferner dazu ausgelegt sind, eines von Folgendem durchzuführen:
auf Basis des Zeitfensters Freigeben einer Verbindung mit dem Netzwerk (104) und Auslegen der Einrichtung (100, 400) in einem Inaktivitätszustand und erneutes Verbinden mit dem Netzwerk (104) zum Warten auf das Ankommen der einen oder der mehreren Nachrichten; oder
auf Basis des Zeitfensters Aussetzen einer Verbindung mit dem Netzwerk (104) und Auslegen der Einrichtung (100, 400) in einem Inaktivitätszustand und Fortsetzen der Verbindung mit dem Netzwerk (104) zum Warten auf das Ankommen der einen oder der mehreren Nachrichten; oder
Deregistrieren und Auslegen der Einrichtung (100, 400) mit einer Wartezeit und Durchführen des Hörens auf die eine oder die mehreren Nachrichten, nachdem die Wartezeit abgelaufen ist und die Einrichtung (100, 400) registriert und wieder mit dem Netzwerk (104) verbunden ist.

3. Einrichtung (100, 400) nach Anspruch 1 oder Anspruch 2, wobei die Mittel ferner dazu ausgelegt sind, ein Aushandeln des Zeitfensters mit dem Netzwerk (104) durchzuführen.

4. Einrichtung (100, 400) nach einem der Ansprüche 1 bis 3, wobei das Bereitstellen das Bereitstellen auf Benutzerebene umfasst und die Mittel ferner dazu ausgelegt sind, eine Paketdateneinheitssitzung während des Zeitfensters aufrechtzuerhalten; und/oder
wobei das Bereitstellen das Bereitstellen auf Steuerebene umfasst und die Mittel ferner dazu ausgelegt sind, eine Nichtzugangsschichtsignalisierungsverbindung während des Zeitfensters aufrechtzuerhalten.

5. Einrichtung (100, 400) nach einem der Ansprüche 1 bis 4, wobei die Mittel ferner dazu ausgelegt sind, das Empfangen des Zeitfensters an der Einrichtung (100, 400) während einer Registrierung oder einer Paketdateneinheitssitzungseinrichtungsprozedur der Einrichtung (100, 400) durchzuführen.

6. Einrichtung (100, 400) nach einem der Ansprüche 1 bis 5, wobei die Einrichtung (100, 400) eine USIM-lose Einrichtung umfasst.

7. Netzwerkeinrichtung (110), **dadurch gekennzeichnet, dass** die Netzwerkeinrichtung Mittel zum Durchführen von Folgendem umfasst:
Aushandeln eines Zeitfensters, das an eine Teilnehmereinrichtung (100, 400) zu senden ist, mit einer oder mehreren anderen Netzwerkeinrichtungen, wobei das Zeitfenster dem Anzeigen einer Zeit zum Empfangen von einer oder mehreren Nachrichten zum Bereitstellen der Teilnehmereinrichtung in einem Netzwerk (104) und dem Auslegen der Teilnehmereinrichtung (100, 400) in einem Inaktivitätszustand außerhalb des Zeitfensters und dem Auslegen der Teilnehmereinrichtung (100, 400) in einem Verbindungszustand während des Zeitfensters zum Empfangen der einen oder der mehreren Nachrichten zum Bereitstellen der Teilnehmereinrichtung (100, 400) für die Teilnehmereinrichtung (100, 400) dient;
wobei die Teilnehmereinrichtung (100, 400) in einem Inaktivitätszustand außerhalb des Zeitfensters ausgelegt ist und in einem Verbindungszustand während des Zeitfensters zum Empfangen der einen oder der mehreren Nachrichten zum Bereitstellen der Teilnehmereinrichtung (100, 400) im Netzwerk (104) ausgelegt ist.

8. Netzwerkeinrichtung (110) nach Anspruch 7, wobei die Mittel ferner dazu ausgelegt sind, das Veranlassen, dass Informationen des Zeitfensters an die Teilnehmereinrichtung (100, 400) gesendet werden, durchzuführen.

9. Netzwerkeinrichtung (110) nach Anspruch 7 oder Anspruch 8, wobei die Mittel ferner dazu ausgelegt sind, das Veranlassen, dass das Zeitfenster während einer Registrierung oder einer Paketdateneinheitssitzungseinrichtungsprozedur der Teilnehmereinrichtung (100, 400) an die Teilnehmereinrichtung (100, 400) gesendet wird, durchzuführen.

10. Netzwerkeinrichtung (110) nach einem der Ansprüche 7 bis 9, wobei das Bereitstellen das Bereitstellen auf Benutzerebene umfasst und die Mittel ferner dazu ausgelegt sind, eine Paketdateneinheitssitzung während des Zeitfensters aufrechtzuerhalten.

11. Netzwerkeinrichtung (110) nach einem der Ansprüche 7 bis 10, wobei das Bereitstellen das Bereitstellen auf Steuerebene umfasst und die Mittel ferner dazu ausgelegt sind, das Veranlassen, dass eine Nichtzugangsschichtsignalisierungsverbindung in Abhängigkeit vom Zeitfenster aufrechterhalten oder freigegeben wird, durchzuführen.

12. Verfahren, das von einer Einrichtung (100, 400) durchgeführt wird und Folgendes umfasst:
Empfangen von Informationen über ein Zeitfenster für die Einrichtung (100, 400) zum Empfangen von einer oder mehreren Nachrichten zum Bereitstellen der Einrichtung (100, 400) in einem Netzwerk (104) von einer Netzwerkentität (110);
**dadurch gekennzeichnet, dass** das Verfahren ferner Folgendes umfasst: Auslegen der Einrichtung (100, 400) in einem Inaktivitätszustand außerhalb des Zeitfensters; und
Auslegen der Einrichtung (100, 400) in einem Verbindungszustand während des Zeitfensters zum Empfangen der einen oder der mehreren Nachrichten zum Bereitstellen der Einrichtung (100, 400).

13. Verfahren das von einer Netzwerkeinrichtung (110) durchgeführt wird, **dadurch gekennzeichnet, dass** das Verfahren Folgendes umfasst:
Aushandeln eines Zeitfensters, das an eine Teilnehmereinrichtung (100, 400) zu senden ist, mit einer oder mehreren anderen Netzwerkeinrichtungen, wobei das Zeitfenster dem Anzeigen einer Zeit zum Empfangen von einer oder mehreren Nachrichten zum Bereitstellen der Teilnehmereinrichtung (100, 400) in einem Netzwerk (104) und dem Auslegen der Teilnehmereinrichtung (100, 400) in einem Inaktivitätszustand außerhalb des Zeitfensters und dem Auslegen der Teilnehmereinrichtung (100, 400) in einem Verbindungszustand während des Zeitfensters zum Empfangen der einen oder der mehreren Nachrichten zum Bereitstellen der Teilnehmereinrichtung (100, 400), für die Teilnehmereinrichtung (100, 400) dient;
wobei die Teilnehmereinrichtung (100, 400) in einem Inaktivitätszustand außerhalb des Zeitfensters ausgelegt ist und in einem Verbindungszustand während des Zeitfensters zum Empfangen der einen oder der mehreren Nachrichten zum Bereitstellen der Teilnehmereinrichtung (100, 400) im Netzwerk (104) ausgelegt ist.

14. Computerprogramm, das Anweisungen zum Veranlassen einer Einrichtung (100, 400), mindestens Folgendes durchzuführen, umfasst:
Empfangen von Informationen über ein Zeitfenster für die Einrichtung (100, 400) zum Empfangen von einer oder mehreren Nachrichten zum Bereitstellen der Einrichtung (100, 400) in einem Netzwerk (104) von einer Netzwerkentität (110);
**dadurch gekennzeichnet, dass** das Computerprogramm ferner Anweisungen zum Veranlassen der Einrichtung (100, 400) zu Folgendem umfasst: Auslegen der Einrichtung (100, 400) in einem Inaktivitätszustand außerhalb des Zeitfensters; und
Auslegen der Einrichtung (100, 400) in einem Verbindungszustand während des Zeitfensters zum Empfangen der einen oder der mehreren Nachrichten zum Bereitstellen der Einrichtung (100, 400).

15. Computerprogramm, **dadurch gekennzeichnet, dass** das Computerprogramm Anweisungen zum Veranlassen einer Netzwerkeinrichtung (110), mindestens Folgendes durchzuführen, umfasst:
Aushandeln eines Zeitfensters, das an eine Teilnehmereinrichtung (100, 400) zu senden ist, mit einer oder mehreren anderen Netzwerkeinrichtungen, wobei das Zeitfenster dem Anzeigen einer Zeit zum Empfangen von einer oder mehreren Nachrichten zum Bereitstellen der Teilnehmereinrichtung (100, 400) in einem Netzwerk (104) und dem Auslegen der Teilnehmereinrichtung (100, 400) in einem Inaktivitätszustand außerhalb des Zeitfensters und dem Auslegen der Teilnehmereinrichtung (100, 400) in einem Verbindungszustand während des Zeitfensters zum Empfangen der einen oder der mehreren Nachrichten zum Bereitstellen der Teilnehmereinrichtung (100, 400), für die Teilnehmereinrichtung (100, 400) dient;
wobei die Teilnehmereinrichtung (100, 400) in einem Inaktivitätszustand außerhalb des Zeitfensters ausgelegt ist und in einem Verbindungszustand während des Zeitfensters zum Empfangen der einen oder der mehreren Nachrichten zum Bereitstellen der Teilnehmereinrichtung (100, 400) im Netzwerk (104) ausgelegt ist.

## Revendications

1. Appareil (100, 400) comprenant des moyens pour effectuer les opérations suivantes :
recevoir d'une entité de réseau (110) des informations d'une fenêtre temporelle pour que l'appareil reçoive un ou plusieurs messages pour le provisionnement de l'appareil (100, 400) dans un réseau (104) ;
**caractérisé en ce que** l'appareil (100, 400) comprend des moyens pour effectuer une configuration de l'appareil (100, 400) dans un état inactif en dehors de la fenêtre temporelle ; et
configurer l'appareil (100, 400) dans un état connecté dans la fenêtre temporelle pour recevoir les un ou plusieurs messages pour le provisionnement de l'appareil (100, 400).

2. Appareil (100, 400) selon la revendication 1, dans lequel les moyens sont en outre configurés pour effectuer l'une des opérations suivantes :
sur la base de la fenêtre temporelle, libérer une connexion avec le réseau (104) et configurer l'appareil (100, 400) dans l'état inactif, et se reconnecter avec le réseau (104) pour attendre l'arrivée des un ou plusieurs messages ; ou
sur la base de la fenêtre temporelle, suspendre une connexion avec le réseau (104) et configurer l'appareil (100, 400) dans l'état inactif, et reprendre la connexion avec le réseau (104) pour attendre l'arrivée des un ou plusieurs messages ; ou
désenregistrer et configurer l'appareil (100, 400) avec un temps de réduction de puissance et effectuer une écoute des un ou plusieurs messages une fois que le temps de réduction de puissance a expiré et que l'appareil (100, 400) s'est enregistré et s'est connecté de nouveau au réseau (104).

3. Appareil (100, 400) selon la revendication 1 ou la revendication 2, dans lequel les moyens sont en outre configurés pour effectuer une négociation de la fenêtre temporelle avec le réseau (104).

4. Appareil (100, 400) selon l'une des revendications 1 à 3, dans lequel le provisionnement comprend le provisionnement du plan utilisateur, et les moyens sont en outre configurés pour effectuer le maintien d'une session d'unité de données par paquet dans la fenêtre temporelle ; et/ou
dans lequel le provisionnement comprend le provisionnement de plan de contrôle, et les moyens sont en outre configurés pour effectuer le maintien d'une connexion de signalisation de strate de non accès dans la fenêtre temporelle.

5. Appareil (100, 400) selon l'une des revendications 1 à 4, dans lequel les moyens sont en outre configurés pour effectuer la réception de la fenêtre temporelle au niveau de l'appareil (100, 400) au cours d'une procédure d'enregistrement ou d'établissement de session d'unité de données par paquet de l'appareil (100, 400).

6. Appareil (100, 400) selon l'une des revendications 1 à 5, dans lequel l'appareil (100, 400) comprend un appareil sans USIM.

7. Appareil de réseau (110) **caractérisé en ce que** l'appareil de réseau comprend des moyens pour effectuer les opérations suivantes :
négocier avec un ou plusieurs autres appareils de réseau une fenêtre temporelle à envoyer à un équipement utilisateur (100, 400), la fenêtre temporelle devant indiquer à l'équipement utilisateur (100, 400) un temps pour recevoir un ou plusieurs messages pour le provisionnement de l'équipement utilisateur dans un réseau (104), et pour configurer l'équipement utilisateur (100, 400) dans un état inactif en dehors de la fenêtre temporelle, et pour configurer l'équipement utilisateur (100, 400) dans un état connecté dans la fenêtre temporelle pour recevoir les un ou plusieurs messages pour le provisionnement de l'équipement utilisateur (100, 400) ;
dans lequel l'équipement utilisateur (100, 400) est configuré dans un état inactif en dehors de la fenêtre temporelle et est configuré dans un état connecté dans la fenêtre temporelle pour recevoir les un ou plusieurs messages pour le provisionnement de l'équipement utilisateur (100, 400) dans le réseau (104).

8. Appareil de réseau (110) selon la revendication 7, dans lequel les moyens sont en outre configurés pour effectuer la provocation de l'envoi des informations de la fenêtre temporelle à l'équipement utilisateur (100, 400).

9. Appareil de réseau (110) selon la revendication 7 ou la revendication 8, dans lequel les moyens sont en outre configurés pour effectuer la provocation de l'envoi de la fenêtre temporelle à l'équipement utilisateur (100, 400) au cours d'une procédure d'enregistrement ou d'établissement de session d'unité de données par paquet de l'équipement utilisateur (100, 400).

10. Appareil de réseau (110) selon l'une des revendications 7 à 9, dans lequel le provisionnement comprend le provisionnement du plan utilisateur, et les moyens sont en outre configurés pour effectuer le maintien d'une session d'unité de données par paquet dans la fenêtre temporelle.

11. Appareil de réseau (110) selon l'une des revendications 7 à 10, dans lequel le provisionnement comprend le provisionnement de plan de contrôle, et les moyens sont en outre configurés pour effectuer la provocation du maintien ou de la libération d'une connexion de signalisation de strate de non accès en fonction de la fenêtre temporelle.

12. Procédé réalisé par un appareil (100, 400), comprenant l'étape suivante :
recevoir d'une entité de réseau (110) des informations d'une fenêtre temporelle pour que l'appareil (100, 400) reçoive un ou plusieurs messages pour le provisionnement de l'appareil (100, 400) dans un réseau (104) ;
**caractérisé en ce que** le procédé comprend en outre les étapes suivantes :
configurer l'appareil (100, 400) dans un état inactif en dehors de la fenêtre temporelle ; et
configurer l'appareil (100, 400) dans un état connecté dans la fenêtre temporelle pour recevoir les un ou plusieurs messages pour le provisionnement de l'appareil (100, 400).

13. Procédé réalisé par un appareil de réseau (110), **caractérisé en ce que** le procédé comprend les étapes suivantes :
négocier avec un ou plusieurs autres appareils de réseau une fenêtre temporelle à envoyer à un équipement utilisateur (100, 400), la fenêtre temporelle devant indiquer à l'équipement utilisateur (100, 400) un temps pour recevoir un ou plusieurs messages pour le provisionnement de l'équipement utilisateur (100, 400) dans un réseau (104), et pour configurer l'équipement utilisateur (100, 400) dans un état inactif en dehors de la fenêtre temporelle, et pour configurer l'équipement utilisateur (100, 400) dans un état connecté dans la fenêtre temporelle pour recevoir les un ou plusieurs messages pour le provisionnement de l'équipement utilisateur (100, 400) ;
dans lequel l'équipement utilisateur (100, 400) est configuré dans un état inactif en dehors de la fenêtre temporelle et est configuré dans un état connecté dans la fenêtre temporelle pour recevoir les un ou plusieurs messages pour le provisionnement de l'équipement utilisateur (100, 400) dans le réseau (104).

14. Programme informatique comprenant des instructions pour amener un appareil (100, 400) à effectuer au moins les opérations suivantes :
recevoir d'une entité de réseau (110) des informations d'une fenêtre temporelle pour que l'appareil (100, 400) reçoive un ou plusieurs messages pour le provisionnement de l'appareil (100, 400) dans un réseau (104) ;
**caractérisé en ce que** le programme informatique comprend en outre des instructions pour amener l'appareil (100, 400) à :
configurer l'appareil (100, 400) dans un état inactif en dehors de la fenêtre temporelle ; et
configurer l'appareil (100, 400) dans un état connecté dans la fenêtre temporelle pour recevoir les un ou plusieurs messages pour le provisionnement de l'appareil (100, 400).

15. Programme informatique, **caractérisé en ce que** le programme informatique comprend des instructions pour amener un appareil de réseau (110) à effectuer au moins les opérations suivantes :
négocier avec un ou plusieurs autres appareils de réseau une fenêtre temporelle à envoyer à un équipement utilisateur (100, 400), la fenêtre temporelle devant indiquer à l'équipement utilisateur (100, 400) un temps pour recevoir un ou plusieurs messages pour le provisionnement de l'équipement utilisateur (100, 400) dans un réseau (104), et pour configurer l'équipement utilisateur (100, 400) dans un état inactif en dehors de la fenêtre temporelle, et pour configurer l'équipement utilisateur (100, 400) dans un état connecté dans la fenêtre temporelle pour recevoir les un ou plusieurs messages pour le provisionnement de l'équipement utilisateur (100, 400) ;
dans lequel l'équipement utilisateur (100, 400) est configuré dans un état inactif en dehors de la fenêtre temporelle et est configuré dans un état connecté dans la fenêtre temporelle pour recevoir les un ou plusieurs messages pour le provisionnement de l'équipement utilisateur (100, 400) dans le réseau (104).
